# EUROPÄISCHE PATENTSCHRIFT

(11) **EP 0 956 982 B1**
(45) Veröffentlichungstag und Bekanntmachung des Hinweises auf die Patenterteilung: **14.06.2006**
(21) Anmeldenummer: 99104320.9
(22) Anmeldetag: 04.03.1999
(51) Int. Cl.: B60G 17/015, B60G 17/052

(54) **Niveauregeleinrichtung**
Height control device
Dispositif de réglage du niveau

(30) Priorität: 13.05.1998 DE 19821305
(43) Veröffentlichungstag der Anmeldung: 17.11.1999
(73) Patentinhaber: WABCO GmbH & CO. OHG, 30453 Hannover (DE)
(72) Erfinder: Kleen, Berend, 30161 Hannover (DE); Sohn, Robert, 30559 Hannover (DE)
(74) Vertreter: Schrödter, Manfred

(56) Entgegenhaltungen:
- EP-A- 0 393 655
- EP-A- 0 752 329
- EP-A- 0 779 166
- WO-A-91/07291
- DE-A- 3 328 497
- DE-A- 4 115 481
- DE-A- 19 622 677
- US-A- 4 364 574
- US-A- 5 180 024
- US-A- 5 286 059
- US-A- 5 517 847
- US-A- 5 696 678

## Beschreibung

Die Erfindung betrifft eine mit Druckmittel arbeitende Niveauregeleinrichtung insbesondere für Fahrzeuge gemäß dem Oberbegriff des Patentanspruchs 1.

Eine Niveauregeleinrichtung ist aus der DE-A1-195 46 730 (entspricht EP 0779 166 A2) bekannt. Bei der bekannten Einrichtung wird eine Schiefstellung des Fahrzeuges, die auf einer asymmetrischen Beladung beruht, nur dann ausgeregelt, wenn die durch die Ausregelung sich ergebende GeradeStellung unter Einhaltung eines erforderlichen Mindest-Druckniveaus für die Luftfederbälge möglich ist, über denen sich der Fahrzeugaufbau gegenüber den Fahrzeugachsen abstützt. Sollte eine Geradestellung bei Einhaltung des Mindest-Druckniveaus nicht möglich sein, so wird die Schiefstellung des Fahrzeugaufbaus über den Fahrzeugachsen temporär beibehalten. Die Schiefstellung bleibt dann unverändert, bis sich eine veränderte Beladungs-Situation ergibt, in der dann die Geradestellung des Fahrzeugs unter Einhaltung des Mindest-Druckniveaus wieder möglich ist.

Die Prüfung, ob die Geradestellung unter dem erforderlichen Mindest-Druckniveau möglich ist, wird dadurch ausgeführt, indem versucht wird, die Regelabweichung durch eine Anzahl von entgegengesetzten Regelspielen auszugleichen; übersteigt diese Anzahl eine vorgegebene Zahl nicht, so ist die Einhaltung des Mindest-Druckniveaus gewährleistet. Die entgegengesetzten Regelspiele bedeuten jedoch Belüftungs- und Entlüftungsvorgänge, bei denen insgesamt ein Luftverlust entsteht, der die Luftversorgungsanlage belastet.

Neben den Beladungs-bedingten Schiefstellungen gibt es auch Schiefstellungen des Fahrzeugaufbaus, die durch einen unebenen Untergrund entstehen (Beispiel: ein Rad einer Fahrzeugachse befindet sich auf dem Bordstein).

Im Gegensatz zu Beladungs-bedingten liegt bei Untergrund-bedingten Schiefstellungen das Problem vor, daß durch die erwähnten mit einer Geradestellung des Fahrzeugs verbundenen Belüftungs- und Entlüftungsvorgänge an den Luftfederbälgen ein unerwünschter Luftverlust entsteht. Besonders bei Niveauregeleinrichtungen, bei denen die Luftversorgungsanlage z. B. durch einen Elektromotor-angetriebenen Kompressor gespeist wird und deren verfügbarer Luftvorrat begrenzt ist, ist jede Art von Luftverlust zu vermeiden, der nicht unbedingt erforderlich ist.

Das Problem wird noch dadurch erhöht, daß nach dem Übergang des Fahrzeuges von dem die Schieflage verursacht habenden unebenen in einen wieder geraden Untergrund die im Zuge einer Ausregelung in der Schiefstellung veränderten Luftfederbalg-Drücke wieder rückgängig gemacht werden müssen, was einen erneuten Luftverlust bedeutet.

Bei Untergrund-bedingten Schiefstellungen kann daher ganz und gar nicht wie bei Beladungs-bedingten Schiefstellungen entsprechend der bekannten Einrichtung vorgegangen werden; eine Anwendung der Lösung nach der bekannten Einrichtung würde das Problem des unerwünschten Luftverlustes sogar noch verschärfen.

Aus der gattungsgemässen DE 196 22 677 A1 ist ein Fahrzeug mit einer niveaugeregelten Luftfederung bekannt. Dort wird bei vollständig oder nahezu stillstehendem Fahrzeug und betätigter Betriebsbremse eine Niveauregelung in der Regel für eine Verzögerungszeit unterbrochen. Erst nach Ablauf der Verzögerungszeit bzw. bei Öffnen einer Fahrzeugtür wird eine weitere Niveauregelung möglich.

Der Erfindung liegt deshalb die Aufgabe zugrunde, Maßriahmen für eine mit Druckmittel arbeitende Niveauregeleinrichtung der eingangs genannten Art vorzusehen, damit bei einer Untergrund-bedingten Schiefstellung des Fahrzeuges keine unnötigen Luftverluste entstehen.

Diese Aufgabe wird durch die in dem Patentanspruch 1 angegebene Erfindung gelöst. Weiterbildungen und vorteilhafte Ausführungsbeispiele der Erfindung sind in den Unteransprüchen angegeben.

Die Erfindung löst sich von der im Stand der Technik herrschenden Vorstellung, daß es vorteilhaft ist, eine Schiefstellung überhaupt auszuregeln; sie hat den Vorteil, daß keine komplizierten, von einem möglichen Schiefstand abhängigen Abläufe vorgenommen werden müssen; da unabhängig davon, ob ein Schiefstand vorliegt oder nicht, eine immer gleiche Vorgehensweise gewählt ist.

Die Erfindung hat den Vorteil, daß zu ihrer Realisierung praktisch keine zusätzlichen Kosten erforderlich sind, da ein für eine Niveauregelanlage ohnehin vorhandenes Regelprogramm nur modifiziert werden muß. Die Realisierung ist zudem sehr einfach, da erfindungsgemäß bestimmte Sollwert-Vorgaben durchzuführen sind, die vom Betriebszustand des Fahrzeuges abhängen.

Die Erfindung wird anhand eines Ausführungsbeispieles näher erläutert.

Die Erfindung bezieht sich auf ein Fahrzeug mit Luftfederung, bei dem sich der Fahrzeugrahmen [gefederter Teil des Fahrzeuges] über den Fahrzeugachsen [ungefederter Teil des Fahrzeuges] durch Luftfederbälge abstützt, wobei mindestens ein Luftfederbalg vorgesehen ist. Die Drücke in den Luftfederbälgen, die den Fahrzeugrahmen tragen, bestimmen das Niveau des Fahrzeugrahmens, nämlich seinen Höhen-Abstand über den Fahrzeugachsen. Die Luftfederung kann als Volluftfederung oder als Teilluftfederung ausgebildet sein.

Das luftgefederte Fahrzeug ist weiter mit einer elektronischen Regeleinrichtung für das Niveau des Fahrzeugrahmens ausgerüstet. Hierzu sind an den Luftfederbälgen Ventile angeordnet, die aufgrund von elektrischen Stellsignalen die Drücke in den ihnen zugeordneten Luftfederbälgen verändern, indem sie diese Luftfederbälge be- oder entlüften. Zur Istwert-Erfassung sind Sensoren vorgesehen, die als Wegsensoren ausgebildet sind und die Ist-Abstände zwischen dem Fahrzeugrahmen und den Fahrzeugachsen ermitteln. In der Minimalausrüstung [ein Luftfederbalg] ist ein Ventil und ein Sensor vorhanden. Für die Regelung des Fahrzeugrahmen-Niveaus ist eine Regelelektronik vorgesehen.

Es wird unterschieden zwischen einmal dieser gesamten Regelelektronik und zum anderen einem spezifischen Elektronik-Regler, welcher die eigentliche Regelfunktion durchführt, der aber selbst einen Teil der übergeordneten Regelelektronik darstellt. Die übergeordneten Funktionen der Regelelektronik bestehen aus generellen Steuerungsaufgaben, aus der Ermittlung von Betriebszuständen des Fahrzeuges und aus den Sollwert-Vorgaben an den ihr unterlagerten Elektronik-Regler und zwar entsprechend dem jeweiligen Fahrzeug-Betriebszustand.

Dem Elektronik-Regler ist ein Soll-Abstand vorgegeben, welcher dem Soll-Niveau des Fahrzeugrahmens entspricht; ihm werden weiter die Ist-Abstände der Sensoren zugeführt, und er erzeugt die Stellsignale, die von entsprechenden, am Elektronik-Regler vorgesehenen Ausgängen an die Ventile zur Veränderung der Drücke in den Luftfederbälgen weitergeleitet werden.

Bei einer Abweichung vom Soll-Abstand verändert der Elektronik-Regler den Druck in einem bestimmten Luftbalg derart, daß der Ist-Abstand an dem ihm zugeordneten Sensor gleich dem vorgegebenen Soll-Abstand wird. Der Elektronik-Regler führt diese Niveauregelung für die einzelnen Luftfederbälge aus; er ist als digitaler Regler mit fester Abtastzeit aufgebaut. Zu den durch die Abtastzeit festgelegten Zeitpunkten wird der Meßwert eines Sensors abgetastet und gilt bis zum nächsten Abtast-Zeitpunkt als Ist-Abstand des betreffenden Sensors.

Für ein Fahrzeug mit Volluftfederung und zwei Fahrzeugachsen sind üblicherweise vier Luftfederbälge vorgesehen; ein Luftfederbalg im Bereich des linken Vorderrades der Vorderachse, ein Luftfederbalg an der Vorderachse "rechts", ein Luftfederbalg an der Hinterachse "links" und ein Luftfederbalg an der Hinterachse "rechts" [wenn an den Rädern der Hinterachse statt eines Luftbalges ein Paar von Luftfederbälgen angeordnet ist, so wird dieses für den Zweck dieser Betrachtung logisch als ein Luftfederbalg betrachtet]. Da eine ebene Fläche im Raum durch drei Punkte definiert ist, genügt es, zur Niveauregelung der genannten vier Luftfederbälge insgesamt drei Sensoren vorzusehen. Üblicherweise sind dies zwei Sensoren an der Hinterachse und ein Sensor an der Vorderachse, wobei die Hinterachsen-Sensoren "links" und "rechts" in der Nähe der Räder angeordnet sind, und sich der Vorderachsen-Sensor irgendwo an der Vorderachse, vorzugsweise etwa in der Mitte der Vorderachse befindet.

Bei einem Fahrzeug mit Teilluftfederung und zwei Fahrzeugachsen ist üblicherweise die Vorderachse blattgefedert ausgeführt, während die Hinterachse mit einer Luftfederung ausgerüstet wird, so daß an der Hinterachse "rechts" und "links" je ein Luftfederbalg angeordnet ist; alternativ zu diesen zwei Luftfederbälgen ist es grundsätzlich möglich, auch nur einen Luftfederbalg vorzusehen, der dann sinnvollerweise etwa in der Mitte der Hinterachse angeordnet ist. Im Falle von zwei Luftfederbälgen sind üblicherweise zwei Sensoren "links" und "rechts" vorgesehen, und für den Fall mit nur einem Luftfederbalg ist nur ein Sensor erforderlich, der an einer beliebigen Stelle der Achse angeordnet sein kann [üblicherweise ist es die Achsenmitte]. Der Vollständigkeit halber sei hinzugefügt, daß es auch Einsatzfälle gibt, bei denen die Hinterachse blattgefedert und die Vorderachse luftgefedert ausgeführt ist.

Eine geregelte luftgefederte Fahrzeugachse verfügt daher über ein oder zwei Luftfederbälge und über ein oder zwei Sensoren. Sind zwei Luftfederbälge implementiert, so läßt sich durch einen asymmetrischen Druck in den Luftfederbälgen [der Druck im Luftfederbalg "links" ist ungleich zum Druck im Luftfederbalg "rechts"] ein Schiefstand [der Fahrzeugrahmen ist nicht parallel zur Fahrzeugachse ausgerichtet] dieser Achse beeinflussen, während dies mit nur einem Luftfederbalg natürlich nicht möglich ist; in analoger Weise läßt sich bei zwei Sensoren ein Schiefstand dieser Achse [der vom linken Sensor erfaßte Ist-Abstand ist ungleich demjenigen Ist-Abstand, der vom rechten Sensor ermittelt wird] erfassen, während dies mit einem Sensor wiederum nicht möglich ist.

Während der Fahrt wird der Fahrzeugrahmen auf das Fahrniveau eingeregelt: Das dem Elektronik-Regler von der Regelelektronik vorgegebene Soll-Niveau ist gleich dem Fahrniveau [Soll-Fahrniveau].

Regelvorgänge, die während der Fahrt durchgeführt werden, bewirken die Einhaltung des Fahrniveaus auch z. B. bei Luftverlust [schleichender Druckabbau aufgrund von Leckagen], oder wenn im Gefälle bzw. in der Steigung durch eine Schwerpunktverlagerung am Fahrzeugaufbau' eine Abweichung im Niveau entsteht. Im Gegensatz zu den unten erläuterten Verhältnissen im Stillstand erfolgen die Regelvorgänge mit einer vergleichsweise großen Regelverzögerung, da dynamische Niveau-Einflüsse, die z. B. bei Kurvenfahrt entstehen, zu unterdrücken sind.

Das Fahrniveau stellt einen von dem Fahrzeughersteller spezifizierten Wert des Abstandes zwischen einer Fahrzeugachse und dem Fahrzeugrahmen dar, d. h. einen Parameter, der nicht verändert werden darf. Das Fahrniveau wird üblicherweise halbautomatisch eingelernt. Hierzu stellt man zuerst das Fahrniveau ein, indem der Fahrzeugrahmen durch Druckeinspeisen in die Luftfederbälge angehoben wird [unter Verwendung der unten erläuterten Fernbedienung in einem speziellen Einlern-Modus], zwischen den Fahrzeugachsen und dem Fahrzeugrahmen dann dem Fahrniveau entsprechende Abstands-Klötze eingelegt werden und man schließlich durch Entlüften der Luftfederbälge den Fahrzeugrahmen auf die Klötze absinken läßt. Die über die Sensoren eingelesenen Ist-Abstände stellen das Soll-Fahrniveau dar, was in der Regelelektronik abgespeichert wird. Dieses Einlernen ist nur bei der Fahrzeug-Inbetriebnahme im Neuzustand oder bei einem entsprechenden Serviceeinsatz erforderlich.

Bei stehendem Fahrzeug wird ein Stillstandsniveau ausgeregelt, welches demjenigen Niveau entspricht, das sich zu Beginn des Stillstandes automatisch eingestellt hat. Dieses Niveau wird als Soll-Stillstandsniveau in der Regelelektronik gespeichert und ist dem Elektronik-Regler beim Stillstand vorgegeben.

Dieses durch das Soll-Stillstandsniveau bestimmte Niveau des Fahrzeugrahmens kann, z. B. im Zuge von Be- und Entladungsvorgängen vom Fahrer verändert werden; der Fahrer stellt so ein neues Soll-Stillstandsniveau ein. Die Einstellung kann innerhalb eines vom Fahrzeughersteller vorgegebenen Bereiches, eines minimalen und eines maximalen Abstandes des Fahrzeugrahmens über der betreffenden Fahrzeugachse, erfolgen.

Die Einstellung des Soll-Stillstandsniveaus wird mit Hilfe der oben erwähnten Fernbedienung vorgenommen. Die Einstellung kann dabei entweder innerhalb oder außerhalb der Fahrerkabine stattfinden.

Die Fernbedienung verfügt über Schalter, die über elektrische Leitungen mit der Regelelektronik verbunden sind. Durch Betätigung eines z. B. als Taster ausgebildeten Schalters für "Heben" und "Senken" wird das gewünschte Soll-Stillstandsniveau des Fahrzeugrahmens eingestellt und gespeichert. ["Heben" erhöht und "Senken" verringert den Wert des Soll-Stillstandsniveaus.]

Dadurch daß das Soll-Stillstandsniveau auch während seiner Veränderung immer als Sollwert [Führungsgröße] am Elektronik-Regler anliegt, ist die Regelfunktion aktiv, und mit der Tasterbetätigung erfolgt auch direkt die geregelte Einstellung des Stillstandsniveaus.

Der Vorgang der Regelfunktion wird am Beispiel einer geregelten luftgefederten Fahrzeugachse mit sowohl je einem Luftfederbalg "links" und "rechts" als auch je einem Sensor auf der linken und rechten Seite der Fahrzeugachse bei stehendem Fahrzeug erläutert; dieser Vorgang entspricht als solcher demjenigen in der erstgenannten gattungsbildenden Schrift.

Entsprechend der Vorgabe des Soll-Stillstandsniveaus ist dem Elektronik-Regler für den linken Luftfederbalg ein Soll-Abstand X_{SL} und für den rechten Luftfederbalg ein Soll-Abstand X_{SR} vorgegeben.

Um diese Höhen-Sollwerte X_{SL} und X_{SR} wird ein Toleranzband gebildet, das sich von dem jeweiligen Sollwert um eine Weg-Toleranz T zu höheren und zu niederen Werten erstreckt; das Toleranzband hat damit eine Weg-Breite von 2T. In praktischen Einsatzfällen ist die Größe der Weg-Toleranz sehr stark von der Art des Fahrzeuges und den konstruktiven Gegebenheiten abhängig; sie beträgt z. B. T=5 mm, so daß die Einhaltung des Soll-Abstandes im Bereich weniger Millimeter möglich ist.

Wie vorstehend erläutert, werden dem Elektronik-Regler die von den Sensoren ermittelten Ist-Abstände zugeführt. Für den linken Luftfederbalg sei dies ein Ist-Abstand X_{IL} und für den rechten Luftfederbalg ein Ist-Abstand X_{IR}.

Bei einem Beladungswechsel ändert sich das Gewicht des Fahrzeugaufbaues, und damit ändern sich auch - aufgrund ihrer Federcharakteristik - die Höhen der Luftfederbälge einer Achse: Es verändern sich die Ist-Abstände X_{IL} und X_{IR}.

Wird die Beladung z. B. auf der linken Seite vergrö-βert, so stellt sich ein kleinerer Wert X_{IL} ein. Überschreitet diese Beladungs-Vergrößerung eine gewisse Grenze, so liegt der neue Ist-Abstand "links" X_{IL} außerhalb des Sollwert-Toleranzbandes, d. h. er ist kleiner als der Wert (X_{SL}-T) .

Als Folge dieser Unterschreitung des Sollwert-Toleranzbandes durch den Ist-Abstand wird durch den Elektronik-Regler der Druck im Luftfederbalg auf der linken Seite der Fahrzeugachse solange erhöht, bis sich am linken Sensor ein Ist-Abstand X_{IL} einstellt, der wieder innerhalb des Sollwert-Toleranzbandes liegt.

Wird bei der Beladungsvergrößerung auch das Sollwert-Toleranzband auf der rechten Seite unterschritten, so wird in sinngemäß gleicher Weise auch der Luftfederbalg "rechts" belüftet, bis der Ist-Abstand X_{IL} wieder innerhalb des Toleranzbandes liegt. Die wechselseitige Belüftung der Luftfederbälge erfolgt in einem zeitlichen Hintereinander (Zeitmultiplexverfahren), wie es der Arbeitsweise eines Abtastreglers entspricht.

Wird die Beladung eines Fahrzeuges reduziert, so dehnen sich die Luftfederbälge einer Achse aus, und die Ist-Abstände X_{IL} und X_{IR} werden vergrößert. Wird dabei das Sollwert-Toleranzband überschritten [X_{IL} > (X_{SL}+T) bzw. X_{IR} > (X_{SR}+T) ] , so werden die Luftfederbälge "links", "rechts" oder "links" und "rechts" solange entlüftet, bis die Ist-Abstände X_{IL} und X_{IR} wieder in das Sollwert-Toleranzband fallen.

Die Regelfunktion des Elektronik-Reglers kann auch zeitweise deaktiviert werden. Diese Deaktivierung entspricht als solche derjenigen in der erstgenannten gattungsbildenden Schrift. In der Zeit der Deaktivierung wird dem Elektronik-Regler ein Soll-Niveau vorgegeben, das mit dem Ist-Niveau gleichgesetzt ist.

Mit dieser Gleichsetzung wird statt des oben erläuterten Sollwert-Toleranzbandes ein temporäres Ersatz-Toleranzband gebildet, und mit der Vorgabe an den Elektronik-Regler wird auf dieses temporäre Ersatz-Toleranzband umgeschaltet.

Beim Ersatz-Toleranzband wird um den vorliegenden Ist-Abstand "links" X_{IL} und den Höhen-Ist-Abstand "rechts" X_{IR} ein Toleranzband mit plus und mit minus der Weg-Toleranz T gelegt, wodurch sich eine gesamte Weg-Breite des Toleranzbandes von 2T ergibt. Durch die Einschaltung dieses Toleranzbandes wird sichergestellt, daß keine Regelabweichung mehr besteht, da das Toleranzband um die bestehenden Istwerte angelegt ist, und damit wird die gegenwärtige Lage des Fahrzeugrahmens relativ zu den Fahrzeugachsen beibehalten.

Aufgrund unterschiedlicher Situationen kann es zeitweise zu einem Schiefstand des Fahrzeugrahmens kommen, bei dem dieser nicht parallel zu einer der Fahrzeugachsen ausgerichtet ist, wobei der Fahrzeugrahmen die untere Begrenzung des als starren Körpers ausgebildeten Fahrzeugaufbaues bildet. Ist daher ein Schiefstand zwischen dem Fahrzeugrahmen und einer Fahrzeugachse gegeben, so wird dieser Schiefstand in vielen Fällen auch auf die anderen Achsen des Fahrzeuges übertragen; die Übertragung irgendeines Schiefstandes wird sich also in vielen Fällen auch auf eine geregelte luftgefederte Fahrzeugachse auswirken, die entsprechend den vorstehenden Erläuterungen mindestens einmal vorhanden ist.

Ein derartiger Schiefstand entsteht z. B., wenn das rechte Rad einer geregelten luftgefederten Fahrzeugachse auf den rechten Bordstein auffährt und der Luftfederbalg an der rechten Seite der Fahrzeugachse einfedert, weil sich die Beladung des Fahrzeuges dabei nicht verändert hat.

Ein Schiefstand tritt auch bei einem teilluftgefederten Fahrzeug auf, wenn das rechte Rad der blattgefederten Vorderachse rechts auf den Bordstein auffährt; üblicherweise sind derartige Fahrzeuge mit starken Stabilisatoren an der Vorderachse ausgerüstet, die dann auch an der geregelten luftgefederten Hinterachse einen Schiefstand "erzwingen". Besonders tritt dieser Effekt bei einem leeren Fahrzeug auf, wenn eine "starke" Vorderachse die Lage des Fahrzeugrahmens weitgehend bestimmt.

Auch wenn beide Räder einer Fahrzeugseite z. B. auf den rechten Bordstein auffahren, kann es zu einem Schiefstand kommen: Zwar würden sich aufgrund der unveränderten Beladung die Federwege an den Achsen durch das "parallele" Anheben auf der rechten Seite nicht verändern, jedoch entsteht durch die Schräglage der Achsen in Bezug auf die ebene Fahrbahn ein Kippmoment, das auf den Schwerpunkt des Fahrzeugaufbaues wirkt, wodurch eine Schwerpunktverlagerung und damit ein Schiefstand zwischen Fahrzeugrahmen und Fahrzeugachsen entstehen kann.

Ein Schiefstand kann auch entstehen, wenn das Fahrzeug an einer schiefen Ebene [Steigung oder Gefälle] anhält. Zwar bleiben die Abstände an beiden Seiten in erster Linie unverändert, jedoch kann es auch hier durch die erläuterte Schwerpunktverlagerung zu einem Schiefstand zwischen Fahrzeugrahmen und Fahrzeugachsen kommen.

Bei Bremsvorgängen führt das Fahrzeug eine Nickbewegung aus; ist die Bremsung stark, so entsteht an der Hinterachse ein Aus- und ein Einfedern in einem Wegbereich von bis zu 30 - 40 mm. Bei derartigen Federbewegungen kann durch die in der mechanischen Verbindung zwischen Fahrzeugrahmen und den Fahrzeugachsen bestehenden Haftreibungseinflüsse [z. B. Stoßdämpfer, Gelenke] nach dem Schwingvorgang eine asymmetrische Niveaulage, d. h. ein Schiefstand, entstehen. Bei der angenommenen starken Bremsung kann es durchaus zu einem Schiefstand mit einer asymmetrischen Weg-Abweichung von z. B. 10 mm kommen, wobei sowohl eine Unter- wie eine Überschreitung des dem Soll-Fahrniveau entsprechenden Weg-Abstandes möglich ist.

Aufgrund der erläuterten, sehr unterschiedlichen Ursachen für einen Fahrzeug-Schiefstand wird keine Ursachenanalyse für einen möglichen Schiefstand vorgenommen, um daraus Rückschlüsse für das weitere Vorgehen zu fällen. Da darüber hinaus bekannt ist, daß z. B. bei einem Fahrzeug mit Teilluftfederung das "Geradeziehen" durch die Luftfederbälge der geregelten luftgefederten Fahrzeugachse aufgrund der erläuterten Stabilisatorwirkung problematisch sein kann, wird überhaupt darauf verzichtet, einen gegenüber den Fahrzeugachsen schiefstehenden Fahrzeugrahmen eines Fahrzeuges durch entsprechende Druckeinsteuerung in Luftfederbälge gerade zu stellen.

Es wird bewußt ein anderer Weg gegangen, bei dem kein Unterschied gemacht wird, ob ein Schiefstand vorliegt oder nicht. Diese Vorgehensweise wird im folgenden erläutert, und zwar am Beispiel der Betriebszustände eines Fahrzeuges, das aus einer ungebremsten Fahrt [Phase 1] anhält, im Stillstand gegebenenfalls be- oder entladen wird [Phase 2], dann wieder anfährt und zunächst den Rangierzustand [Phase 3] einnimmt, um dann schließlich wieder in den Fahrzustand überzugehen [Phase 4]. Während Phase 1 ist, wie erläutert, dem Elektronik-Regler das Soll-Fahrniveau vorgegeben; mit dieser Vorgabe ist gleichzeitig auch die Regelfunktion aktiviert. Dieser Zustand wird beibehalten, solange keine Bremsung eintritt.

Der Regeleinrichtung wird eingangsseitig ein geeignetes Signal zugeführt, an dessen Zustand sie erkennen kann, ob die Betriebsbremse des Fahrzeuges betätigt ist oder nicht; im einfachsten Fall kann hierfür das Signal des Bremslichtschalters verwendet werden.

Erkennt die Regeleinrichtung eine Betätigung der Betriebsbremse, so wird die Regelfunktion deaktiviert. Der Grund für die Deaktivierung besteht darin, daß die Trägheitskräfte, die beim Bremsen wirken, zu einer Verspannung des Fahrzeugrahmens gegenüber den Fahrzeugachsen führen. Da man bei Niveaukorrekturen davon ausgehen muß, daß der Fahrzeugaufbau sich "beweglich" über den Luftfederbälgen abstützt, sind solche bei einem verspannten Fahrzeug natürlich nicht durchführbar.

Beim Bremsen führt der Fahrzeugaufbau, wie erläutert, mehr oder weniger starke Aufbaubewegungen durch, die nach einer Beruhigungszeit ausschwingen [auspendeln]. Diese Beruhigungszeit hängt natürlich vom Typ des Fahrzeuges ab, sie liegt typisch in einem Bereich von 3 bis 10 s.

Die für das Fahrzeug typische Beruhigungszeit wird als Verzögerungszeit benutzt. Die Verzögerungszeit stellt einen Parameter dar, der der Regeleinrichtung vorgegeben wird.

Ab dem Zeitpunkt des Bremsbeginnes wird gleichzeitig mit der Deaktivierung der Regelfunktion ein Zeitglied gestartet, das so lange wie die genannte Verzögerungszeit aktiv ist. Bei aktivem Zeitglied bleibt die Regelfunktion deaktiviert.

Nach Ablauf der Verzögerungszeit [das Zeitglied geht von dem aktiven in den passiven Zustand über] hat sich der Fahrzeugaufbau entsprechend beruhigt, so daß Niveaukorrekturen wieder möglich sind. Zu diesem Zeitpunkt wird die Regeleinrichtung wieder aktiviert. Soweit das Fahrzeug zu diesem Zeitpunkt noch fährt, wird dem Elektronik-Regler noch weiter das Soll-Fahrniveau vorgegeben.

Wenn dagegen nach Ablauf der Verzögerungszeit das Fahrzeug steht [die Fahrzeuggeschwindigkeit ist Null], beginnt die Phase 2 des Fahrzeug-Stillstandes. Die Aktivierung der Regelfunktion erfolgt, indem dem Elektronik-Regler das Soll-Stillstandsniveau vorgeben wird. Das Soll-Stillstandsniveau stellt das Stillstandsniveau dar, wie es sich im Verlauf der Verzögerungszeit am Fahrzeug automatisch eingestellt hat; es wird zum Zeitpunkt des Ablaufes der Verzögerungszeit ermittelt, indem die zu diesem Zeitpunkt vorliegenden Ist-Abstände eingelesen wurden. Dieser Vorgang erfolgt ganz unabhängig davon, ob ein Schiefstand vorliegt oder nicht. Das Soll-Stillstandsniveau wird zu seiner gegebenenfalls späteren Veränderung mit Hilfe der Fernbedienung in der Regeleinrichtung abgespeichert.

Dadurch daß während des Bremsvorganges, der zum Anhalten des Fahrzeuges geführt hat, die Drücke in den Luftfederbälgen nicht verändert wurden, liegen beim Fahrzeugstillstand immer noch die Druckverhältnisse aus der vorhergehenden Fahrt nach Phase 1 vor. Wird ohne einen Beladungswechsel wieder in den Fahrbetrieb entsprechend der unten näher erläuterten Phase 4 übergegangen, so sind zwischen Phase 1 und Phase 4 überhaupt keine Regelvorgänge durchgeführt worden, wodurch auch kein Luftverlust entstanden ist. Diese Aussage gilt auch dann, wenn das Soll-Stillstandsniveau auf einem Schiefstand beruht, der sich im Verlauf des Anhaltens eingestellt hat.

Entsprechend den erläuterten Situationen für einen Schiefstand kann das Soll-Stillstandsniveau, wie es sich während der Verzögerungszeit eingestellt hat, gegenüber dem [natürlich ebenen] Fahrniveau nach Phase 1 unterschiedlich ausgerichtet sein; es kann zunächst eben und gleich dem Fahrniveau sein [Fall 1], dann kann es eben aber ungleich dem Fahrniveau sein [Fall 2], weiter kann es [im erläuterten Sinne eines Schiefstandes] schief sein, wobei das Niveau der Achsenmitte [Mitte der Fahrzeugachse zwischen rechtem und linkem Rad] gleich dem Fahrniveau ist [Fall 3], und schließlich kann es schief sein, wobei die Achsenmitte ungleich dem Fahrniveau ist [Fall 4]. Bei den Niveau-Gleichheiten nach den Fällen 1 und 3 ist der Fahrniveau-Achsenmitten-Abstand [Abstand zwischen dem Fahrniveau und der Achsenmitte als gerichteter Größe] gleich Null, und bei den Niveau-Ungleichheiten nach den Fällen 2 und 4 ist der Fahrniveau-Achsenmitten-Abstand ungleich Null, wobei er sowohl größer als auch kleiner als Null sein kann.

Wenn während des Fahrzeugstillstandes das Fahrzeug be- oder entladen wird, so wird, wie vorstehend erläutert, das Ist-Niveau in der beschriebenen Weise ausgeregelt [Einhaltung des Soll-Stillstandsniveaus], was bedeutet, daß sich die Drücke in den Luftfederbälgen in einer Art ändern, wie sie dem Beladungswechsel entsprechen. In den Luftfederbälgen wurden auf diese Weise die Druckverhältnisse an die neu gegebene Beladungssituation angepaßt. Dies bedeutet, daß diese neuen Druckverhältnisse den Druckverhältnissen des Fahrniveaus üblicherweise sehr nahekommen. Beim Übergang in den Fahrbetrieb [Phase 4], wie er unten erläutert wird, müssen daher die Drücke in den Luftfederbälgen, wenn überhaupt, nur geringfügig angepaßt werden. So führt die Ausregelung des Stillstandsniveaus, die ausschließlich auf Beladungswechsel anspricht, zu insgesamt einer Minimierung der Regelvorgänge.

Für den Fall, daß das Soll-Stillstandsniveau auf einem Schiefstand beruht, sei hier ergänzend erläutert, daß dieser Schiefstand natürlich bei allen beladungsbedingten Regelvorgängen beibehalten wird.

Das Soll-Stillstandsniveau läßt sich in der beschriebenen Weise mit Hilfe der Fernbedienung verändern, wenn z. B. eine Niveau-Einstellung an einer Laderampe erfolgen soll. Bei einer Veränderung wird die Richtung des Soll-Stillstandsniveaus beibehalten, d. h. es erfolgt eine parallele Verschiebung [Heben bzw. Senken] der Niveauanlage, wie sie sich während der Verzögerungszeit eingestellt hat. Mit dieser Veränderung ändert sich jedoch auch der Fahrniveau-Achsenmitten-Abstand. Der aktuelle Fahrniveau-Achsenmitten-Abstand ergibt sich rechnerisch zu einem bestimmten Zeitpunkt aus dem dann eingestellten Soll-Stillstandsniveau [Achsenmitte] und dem Fahrniveau [Parameter].

Wie vorstehend erläutert, kann die Einstellung [Veränderung] des Soll-Stillstandsniveaus nur innerhalb eines vorgegebenen Abstands-Bereiches zwischen Fahrzeugrahmen und Fahrzeugachse erfolgen. Liegt bei dem stillstehenden Fahrzeug ein Schiefstand vor, so wird beim Heben auf derjenigen Seite, auf der der Fahrzeugrahmen durch den Schiefstand höher steht, diese Grenze des Niveaubereiches zuerst erreicht sein. An dieser Stelle ist eine weitere Niveauerhöhung natürlich nicht möglich. Dagegen ist auf der anderen Seite eine Niveauerhöhung noch zulässig. Durch eine weitere Betätigung des Heben-Tasters bleibt die Niveauhöhe an der Stelle, an der sie bereits die Grenze erreicht hat, erhalten, während sie auf der anderen Seite bis zur dortigen Grenze des Niveaubereiches angehoben wird.

Diese Art der manuellen Veränderung gilt auch für das Senken. Bei einer im Zuge einer Veränderung des Stillstandsniveaus erreichten Grenze des Niveaubereiches auf der einen Seite der Achse kann daher durch weitere Taster-Betätigung das Niveau auf der anderen Seite dieser Achse solange verändert werden, bis die auch auf dieser Seite geltende Grenze erreicht ist.

Wenn das Fahrzeug aus dem Stillstand anfährt, so hängt das weitere Vorgehen von der Fahrzeuggeschwindigkeit ab.

Bei kleinen Geschwindigkeiten, d.h. bei einer Fahrgeschwindigkeit von größer als Null, aber kleiner als der dem Fahrzustand entsprechenden Geschwindigkeit liegt ein Zustand "Rangieren" vor [Phase 3]. Beim Rangieren soll einerseits eine während des Stillstandes durchgeführte Veränderung des Niveaus nach Möglichkeit beibehalten werden, andererseits werden jedoch bei jeglicher Fahrt nur ebene Sollwertvorgaben gemacht. Das Soll-Rangierniveau stellt daher ein ebenes Niveau mit dem aktuellen Fahrniveau-Achsenmitten-Abstand dar [das Soll-Rangierniveau ist gleich dem um den aktuellen Fahrniveau-Achsenmitten-Abstand reduzierten Fahrniveau].

Bezüglich der Regelverzögerung wird im Rangierzustand die vergleichsweise lange Regelverzögerung des Fahrzustandes eingestellt, da während des Rangierens möglichst keine Ausregelung des Niveaus erfolgen soll.

Im Gegensatz zum Fahrzustand läßt sich aber das Soll-Rangierniveau im Rangierzustand manuell mit Hilfe der Fernbedienung verändern; die Veränderung des Soll-Rangierniveaus erfolgt hier ebenfalls in der für das Soll-Stillstandsniveau beschriebenen Weise. Ein verändertes Soll-Stillstandsniveau bestimmt den neuen aktuellen Fahrniveau-Achsenmitten-Abstand.

Die Veränderung des Soll-Rangierniveaus ist vorteilhaft, wenn zur Zeitersparnis schon während des Rangierens Niveaueinstellungen für z. B. eine Laderampe oder für das Abstellen von Containern vorgenommen werden.

Wird aus dem Rangierzustand erneut angehalten, so stellt sich in der Art und Weise, wie es oben beim Übergang von Phase 1 auf Phase 2 erläutert ist, ein neues Soll-Stillstandsniveau ein [Einlesen des Ist-Abstandes nach Ablauf der Verzögerungszeit].

Geht das Fahrzeug aus diesem Stillstand wieder in einen neuen Rangierzustand über, so bestimmt sich in der erläuterten Weise das Soll-Rangierniveau wieder aus dem aktuellen Fahrniveau-Achsenmitten-Abstand.

Der Grundgedanke für dieses erfindungsgemäße Prinzip besteht darin, daß bei keinerlei manueller Niveau-Veränderung auch beim Rangieren das dem Fahrzustand entsprechende Fahrniveau gültig ist; wird dagegen [bei Stillstand oder auch während des Rangierens selbst] das Niveau bewußt manuell verändert, so stellt der aktuelle Fahrniveau-Achsenmitten-Abstand das jeweilige Ergebnis der Veränderung [das summarische Ergebnis aller einzelnen Veränderungen], nämlich den Abstand zum Fahrniveau dar. Dieser kann sowohl positiv als auch negativ sein.

Der Wechsel zwischen Stillstand und Rangieren kann beliebig oft erfolgen, wobei das Soll-Stillstandsniveau sich jeweils automatisch einstellt, und das Soll-Rangierniveau aus dem aktuellen Fahrniveau-Achsenmitten-Abstand ermittelt wird.

Wie erläutert, geht das Fahrzeug beim Anfahren zunächst immer in den Rangierzustand [Phase 3] über. Wenn das Fahrzeug dann eine bestimmte vorgegebene Geschwindigkeit überschreitet, die z.B. 30 km/h beträgt, so wird in den [normalen] Fahrzustand [Phase 4] übergegangen, bei dem dem Elektronik-Regler das Soll-Fahrniveau vorgegeben ist.

Die erläuterte Vorgehensweise für die Phasen 1 bis 4 läßt sich deshalb besonders einfach realisieren, da die Regelelektronik entsprechend dem vorliegenden Fahrzeug-Betriebszustand das Soll-Stillstandsniveau, das Soll-Rangierniveau oder das Soll-Fahrniveau vorgibt, oder indem sie den Elektronik-Regler durch Vorgabe des Ist-Niveaus deaktiviert.

Alternativ zur erläuterten Methode des Einlesens der Ist-Abstände zur Festlegung des Soll-Stillstandsniveaus für die Phase 2 kann die Festlegung des Soll-Stillstandsniveaus in grundsätzlich gleich wirkender, jedoch programmtechnisch etwas abgewandelter Form erfolgen. Nach der abgewandelten Form werden mit Ablauf der Verzögerungszeit an den Sensoren einer Fahrzeugachse die Differenz-Abstände zum Fahrniveau gemessen. Das Soll-Stillstandsniveau wird dann durch Addition von Fahrniveau und Differenz-Abständen auf der linken und der rechten Seite der Fahrzeugachse bestimmt.

## Patentansprüche

1. Mit Druckluft arbeitende Niveauregeleinrichtung mit folgenden Merkmalen:
a) Es ist mindestens ein Luftfederbalg vorgesehen, der den Fahrzeugrahmen über mindestens einer Fahrzeugachse abstützt;
b) das Niveau des Fahrzeugrahmens über einer Fahrzeugachse ist durch den in den Luftfederbälgen herrschenden Druck bestimmt;
c) es ist eine Ventileinrichtung zur Druckveränderung in den Luftfederbälgen vorgesehen;
d) es ist mindestens ein Sensor zur Ermittlung des Ist-Niveaus, nämlich des Ist-Abstandes zwischen einer Fahrzeugachse und dem Fahrzeugaufbau vorgesehen;
e) es ist eine Regeleinrichtung vorgesehen, der frei wählbare Soll-Niveaus, nämlich Soll-Abstände zwischen Fahrzeugachsen und dem Fahrzeugaufbau, vorgebbar sind, und die die Ventileinrichtung derart steuert, daß die aus der Differenz zwischen Soll- und den entsprechenden Ist-Niveaus bestehende Regelabweichung minimiert ist;
f) es kann zeitweise ein Schiefstand gegeben sein, bei dem mindestens eine niveaugeregelte Fahrzeugachse nicht parallel zum Fahrzeugrahmen ausgerichtet ist;
g) durch Vorgabe eines dem aktuellen Ist-Niveau gleichgesetzten Soll-Niveaus ist die Regelfunktion der Regeleinrichtung deaktivierbar;
h) für den Zustand "Stillstand" ist die Regeleinrichtung aktiviert;
i) für den Zustand "Stillstand" ist der Regeleinrichtung ein diesem Zustand entsprechendes Soll-Stillstandsniveau vorgegeben;
**gekennzeichnet durch** die folgenden Merkmale:
k) bei einem **durch** eine Fahrsituation bedingten Schiefstand ist der Regelinrichtung ein Soll-Niveau vorgegeben, das dem Ist-Niveau des Fahrzeugrahmen-Fahrzeugachsen-Schiefstandes entspricht;
l) das zur Soll-Niveau-Vorgabe verwendete Ist-Niveau ist nach Ablauf einer vorgebbaren, auf den Zeitpunkt des Eintritts des Schiefstandes folgenden Verzögerungszeit ermittelt.

2. Einrichtung nach Anspruch 1, **dadurch gekennzeichnet, daß** der Zustand "Stillstand" bei einer Fahrgeschwindigkeit von Null nach Ablauf einer vorgebbaren Verzögerungszeit erkannt ist.

3. Einrichtung nach Anspruch 1 oder 2, **dadurch gekennzeichnet, daß** das Soll-Stillstandsniveau manuell veränderbar ist.

4. Einrichtung nach Anspruch 3, **dadurch gekennzeichnet, daß** die Veränderung des Soll-Stillstandsniveaus nur innerhalb des für das Fahrzeug zulässigen Niveaubereiches stattfindet.

5. Einrichtung nach Anspruch 4, **dadurch gekennzeichnet, daß** bei einer im Zuge einer Veränderung des Soll-Stillstandsniveaus erreichten Grenze des Niveaubereiches auf einer Seite einer Achse das Niveau auf der anderen Seite dieser Achse bis zum Erreichen der auf dieser Seite geltenden Grenze des Niveaubereiches veränderbar ist.

6. Einrichtung nach Anspruch 5, **dadurch gekennzeichnet, daß** zur manuellen Veränderung des Soll-Stillstandsniveaus die Betätigung nur eines Schalters erforderlich ist, der mindestens über die Schaltstellungen "Heben" und "Senken" verfügt.

7. Einrichtung nach mindestens einem der Ansprüche 1 bis 6, **dadurch gekennzeichnet, daß** ausgehend vom Zustand Stillstand der Rangierzustand erkannt ist, wenn die Fahrgeschwindigkeit größer als Null, aber kleiner als eine den Fahrzustand bestimmende Mindestgeschwindigkeit ist.

8. Einrichtung nach mindestens einem der Ansprüche 1 bis 6, **dadurch gekennzeichnet, daß**, ausgehend vom Zustand "Stillstand", der Fahrzustand erkannt ist, wenn die Fahrgeschwindigkeit die vorgebbare Mindestgeschwindigkeit überschreitet.

9. Einrichtung nach Anspruch 1, ge**kennzeichnet durch** die folgenden Merkmale:
a) Für den Fahrzustand ist die Regeleinrichtung aktiviert, wenn die Fahrgeschwindigkeit eine vorgebbare Mindestgeschwindigkeit übersteigt und keine Bremsbetätigung vorliegt;
b) für den Fahrzustand ist der Regeleinrichtung als Soll-Niveau das Soll-Fahrniveau vorgegeben.

10. Einrichtung nach Anspruch 9, **dadurch gekennzeichnet, daß** im Fahrzustand die Regeleinrichtung mit einer Bremsbetätigung deaktiviert wird.

11. Einrichtung nach Anspruch 10, **dadurch gekennzeichnet, daß** im Fahrzustand bei Bremsbetätigungs-verursachter Deaktivierung der Regeleinrichtung diese nach Ablauf einer auf die Bremsbetätigung folgenden vorgebbaren Verzögerungszeit wieder aktiviert ist.

12. Einrichtung nach Anspruch 10, **dadurch g**ekennzeichnet, daß ausgehend vom Fahrzustand bei einer Fahrgeschwindigkeit von Null nach Ablauf einer vorgebbaren Verzögerungszeit der Zustand "Stillstand" erkannt ist.

13. Einrichtung nach Anspruch 1, **dadurch gekennzeichnet, daß** die Regeleinrichtung mit Ablauf der vorgebbaren Verzögerungszeit aktiviert ist.

14. Einrichtung nach Anspruch 13, **dadurch g**ekennzeichnet, daß die Aktivierung nur bei einer Fahrzeuggeschwindigkeit von Null erfolgt.

15. Einrichtung nach mindestens einem der Ansprüche 1, 13, 14, **dadurch gekennzeichnet, daß** mit der Aktivierung der Regeleinrichtung Niveauänderungen, die auf einen Wechsel in der Beladung zurückzuführen sind, ausgeregelt werden.

16. Einrichtung nach Anspruch 1, **gekennzeichnet durch** die folgenden Merkmale:
a) Es ist ein Zustand "Rangieren" vorgesehen, in dem die Regeleinrichtung aktiviert ist;
b) für den Zustand "Rangieren" ist der Regeleinrichtung ein diesem Zustand entsprechendes Soll-Rangierniveau vorgegeben.

17. Einrichtung nach Anspruch 16, **dadurch gekennzeichnet, daß** ausgehend vom Zustand "Stillstand" der Zustand "Rangieren" erkannt ist, wenn die Fahrgeschwindigkeit größer als Null, aber kleiner als eine den Fahrzustand bestimmende Mindestgeschwindigkeit ist.

18. Einrichtung nach Anspruch 16 oder 17, **dadurch gekennzeichnet, daß** für den Fahrzustand der Regeleinrichtung als Soll-Niveau ein Soll-Fahrniveau vorgegeben ist, und das Soll-Rangierniveau durch das um den aktuellen Fahrniveau-Achsenmitten-Abstand reduzierte Soll-Fahrniveau bestimmt ist, wobei der aktuelle Fahrniveau-Achsenmitten-Abstand durch manuelle Niveau-Veränderung erzeugt ist.

19. Einrichtung nach einem der Ansprüche 16 bis 18, d**adurch gekennzeichnet, daß** das Soll-Rangierniveau manuell veränderbar ist.

20. Einrichtung nach Anspruch 19, **dadurch gekennzeichnet, daß** die Veränderung des Soll-Rangierniveaus nur innerhalb des für das Fahrzeug zulässigen Niveaubereiches stattfindet.

21. Einrichtung nach Anspruch 20, **dadurch gekennzeichnet, daß** zur manuellen Veränderung des Soll-Stillstandsniveaus die Betätigung nur eines Schalters erforderlich ist, der mindestens über die Schaltstellungen "Heben" und "Senken" verfügt.

22. Einrichtung nach wenigstens einem der Ansprüche 16 bis 21, **dadurch gekennzeichnet, daß** für den Fahrzustand der Regeleinrichtung als Soll-Niveau das Soll-Fahrniveau vorgegeben ist, und die Regelelektronik entsprechend dem vorliegenden Fahrzeug-Betriebszustand das Soll-Stillstandsniveau, das Soll-Rangierniveau oder das Soll-Fahrniveau vorgibt.

23. Einrichtung nach wenigstens einem der vorhergehenden Ansprüche, **dadurch gekennzeichnet, daß** das Soll-Stillstandsniveau das Stillstandsniveau darstellt, wie es sich im Verlauf der Verzögerungszeit am Fahrzeug automatisch eingestellt hat.

24. Einrichtung nach Anspruch 23, **dadurch gekennzeichnet, daß** das Soll-Stillstandsniveau zum Zeitpunkt des Ablaufes der Verzögerungszeit ermittelt wird, indem die zu diesem Zeitpunkt vorliegenden Ist-Abstände eingelesen werden.

## Claims

1. Level-regulating device operated by compressed air and having the following features:
a) at least one air spring bellows is provided, which supports the vehicle chassis above at least one vehicle axle;
b) the level of the vehicle chassis above a vehicle axle is determined by the pressure in the air spring bellows;
c) a valve device is provided to alter the pressure in the air spring bellows;
d) at least one sensor is provided to determine the actual level, namely, the actual spacing between a vehicle axle and the vehicle body;
e) a controller is provided, at which freely selectable desired levels, namely desired spacings between vehicle axles and the vehicle body are presettable, and which controls the valve device such that the control error comprising the difference between desired and the corresponding actual levels is minimised;
f) a tilted state can exist temporarily, in which at least one level-regulated vehicle axle is not aligned parallel to the vehicle chassis;
g) by presetting a desired level equated with the current actual level, the control function of the controller can be disabled;
h) the controller is activated for the "standstill" mode;
i) for the "standstill" mode a desired standstill level corresponding to this mode is preset at the controller;
**characterised by** the following features:
k) with a tilted state caused by the circumstances of driving, a desired level that corresponds to the actual level of the vehicle chassis-vehicle axle tilted state is preset at the controller;
l) the actual level used for presetting the desired level is determined after expiry of a presettable delay time following the instant at which the tilted state occurs.

2. A device according to claim 1, **characterised in that** the "standstill" mode is recognised at a vehicle speed of zero after expiry of a presettable delay time.

3. A device according to claim 1 or 2, **characterised in that** the desired standstill level is manually modifiable.

4. A device according to claim 3, **characterised in that** the modification of the desired standstill level takes place only within the level range admissible for the vehicle.

5. A device according to claim 4, **characterised in that** in the case of a limit of the level range on one side of an axle reached during the course of a modification to the desired standstill level, the level on the other side of this axle is modifiable until the limit of the level range valid on that side is reached.

6. A device according to claim 5, **characterised in that**, for manual modification of the desired standstill level, the operation of only one switch is required, which has at least the switching positions "raise" and "lower".

7. A device according to at least one of claims 1 to 6, **characterised in that**, starting from the standstill mode, the manoeuvring mode is recognised when the vehicle speed is greater than zero but less than a minimum speed determining the driving mode.

8. A device according to at least one of claims 1 to 6, **characterised in that** starting from the "standstill" mode, the driving mode is recognised when the vehicle speed exceeds the presettable minimum speed.

9. A device according to claim 1, **characterised by** the following features:
a) for driving mode the controller is activated when the vehicle speed exceeds a presettable minimum speed and there is no brake application;
b) for driving mode the desired driving level is preset at the controller as desired level.

10. A device according to claim 9, **characterised in that** in driving mode the controller is disabled by a brake application.

11. A device according to claim 10, **characterised in that**, in driving mode, on disabling of the controller caused by brake application, the controller is reactivated after expiry of a presettable delay time following the brake application.

12. A device according to claim 10, **characterised in that**, starting from driving mode, at a vehicle speed of zero after expiry of a presettable delay time the "standstill" mode is recognised.

13. A device according to claim 1, **characterised in that** the controller is activated on expiry of the presettable delay time.

14. A device according to claim 13, **characterised in that** the activation is effected only at a vehicle speed of zero.

15. A device according to at least one of claims 1, 13, 14, **characterised in that** level changes that are attributable to a change in loading are corrected with activation of the controller.

16. A device according to claim 1, **characterised by** the following features:
a) a "manoeuvring" mode is provided, in which the controller is activated;
b) for the "manoeuvring" mode a desired manoeuvring level corresponding to this mode is preset at the controller.

17. A device according to claim 16, **characterised in that**, starting from the "standstill" mode, the "manoeuvring" mode is recognised when the vehicle speed is greater than zero but less than a minimum speed determining the driving mode.

18. A device according to claim 16 or 17, **characterised in that** for the driving mode a desired driving level is preset at the controller as desired level, and the desired manoeuvring level is determined by the desired driving level reduced by the current driving level-to-axle midpoint spacing, the current driving level-to-axle midpoint spacing being produced by manual modification of the level.

19. A device according to claim 16 to 18, **characterised in that** the desired manoeuvring level is manually modifiable.

20. A device according to claim 19, **characterised in that** the modification of the desired manoeuvring level takes place only within the level range admissible for the vehicle.

21. A device according to claim 20, **characterised in that** for manual modification of the desired standstill level, the operation of only one switch is required, which has at least the switching positions "raise" and "lower".

22. A device according to at least one of claims 16 to 21, **characterised in that**, for the driving mode, the desired driving level is preset at the controller as desired level and, corresponding to the existing vehicle operative state, the control electronics preset the desired standstill level, the desired manoeuvring level or the desired driving level.

23. A device according to at least one of the preceding claims, **characterised in that** the desired standstill level represents the standstill level that the vehicle has automatically attained during the course of the delay time.

24. A device according to claim 23, **characterised in that** the desired standstill level is determined at the instant of expiry of the delay time, by reading in the actual spacings existing at this instant.

## Revendications

1. Dispositif de réglage de niveau fonctionnant à l'air comprimé présentant les caractéristiques suivantes :
a) il est prévu au moins un soufflet pneumatique, qui supporte le châssis du véhicule au-dessus d'au moins un essieu de véhicule ;
b) le niveau du châssis de véhicule au-dessus de l'essieu de véhicule est déterminé par la pression régnant dans les soufflets pneumatiques ;
c) il est prévu une soupape pour le changement de pression dans les soufflets pneumatiques ;
d) il est prévu au moins un capteur pour détecter le niveau effectif, notamment la distance effective entre un essieu de véhicule et la carrosserie ;
e) il est prévu un dispositif de réglage, qui peut détecter des niveaux de consigne arbitraires, notamment des distances de consigne entre les essieux de véhicule et la carrosserie de véhicule, et qui commande la soupape de sorte que l'écart de réglage résultant de la différence entre le niveau de consigne et le niveau effectif correspondant est minimisé ;
f) il peut exister temporairement un état incliné, dans lequel au moins un essieu de véhicule régulé par niveau n'est pas orienté parallèlement au châssis du véhicule ;
g) la fonction de réglage du dispositif de réglage peut être désactivée par détermination d'un niveau de consigne égal au niveau effectif actuel ;
h) le dispositif de réglage est activé pour l'état "arrêt" ;
i) pour l'état "arrêt", un niveau d'arrêt de consigne correspondant à cet état est déterminé par le dispositif de réglage ;
**caractérisé par** les caractéristiques suivantes :
k) dans le cas d'un état incliné dû à une situation de conduite, un niveau de consigne, qui correspond au niveau effectif du châssis de véhicule-essieu de véhicule-état incliné, est déterminé par le dispositif de réglage ;
l) le niveau effectif utilisé pour déterminer le niveau de consigne peut être détecté après l'écoulement d'un temps de retard pouvant être déterminé et suivant le moment d'entrée dans l'état incliné.

2. Dispositif selon la revendication 1, **caractérisé en ce que** l'état "arrêt" est reconnu dans le cas d'une vitesse de marche nulle après écoulement d'un temps de retard pouvant être détecté.

3. Dispositif selon la revendication 1 ou 2, **caractérisé en ce que** le niveau d'arrêt de consigne peut être changé manuellement.

4. Dispositif selon la revendication 3, **caractérisé en ce que** le changement du niveau d'arrêt de consigne ne se produit qu'à l'intérieur d'une plage de niveau admissible pour le véhicule.

5. Dispositif selon la revendication 4, **caractérisé en ce que**, dans le cas d'une limite de la plage de niveau atteinte au cours d'un changement du niveau d'arrêt de consigne sur un côté de l'essieu, le niveau sur l'autre côté de cet essieu peut être changé jusqu'à atteindre la limite de la plage de niveau valable sur ce côté.

6. Dispositif selon la revendication 5, **caractérisé en ce que**, en vue du changement manuel du niveau d'arrêt de consigne, l'actionnement d'un seul commutateur est nécessaire, qui dispose au moins des positions de commutation "remonter" et "abaisser".

7. Dispositif selon au moins une des revendications 1 à 6, **caractérisé en ce que**, à partir de l'état d'arrêt, l'état de manoeuvre est reconnu, lorsque la vitesse de marche est supérieure à zéro mais inférieure à la vitesse minimale déterminant l'état de marche.

8. Dispositif selon au moins l'une des revendications 1 à 6, **caractérisé en ce que**, à partir de l'état "arrêt", l'état de marche est reconnu, lorsque la vitesse de marche dépasse la vitesse minimale pouvant être détectée.

9. Dispositif selon la revendication 1, **caractérisé par** les caractéristiques suivantes :
a) pour l'état de marche, le dispositif de réglage est actionné, lorsque la vitesse de marche dépasse une vitesse minimale pouvant être détectée et qu'il ne se produit aucun actionnement des freins ;
b) pour l'état de marche, le niveau de marche de consigne est prédéterminé comme niveau de consigne par le dispositif de réglage.

10. Dispositif selon la revendication 9, **caractérisé en ce que**, dans l'état de marche, le dispositif de réglage est désactivé lors d'un actionnement des freins.

11. Dispositif selon la revendication 10, **caractérisé en ce que**, dans l'état de marche, dans le cas d'une désactivation du dispositif de réglage provoquée par un actionnement des freins, celui-ci est de nouveau activé après l'écoulement d'un temps de retard pouvant être détecté suivant l'actionnement des freins.

12. Dispositif selon la revendication 10, **caractérisé en ce que**, à partir de l'état de marche, dans le cas d'une vitesse de marche nulle, l'état "arrêt" est reconnu après écoulement d'un temps de retard pouvant être détecté.

13. Dispositif selon la revendication 1, **caractérisé en ce que** le dispositif de réglage est activé par l'écoulement du temps de retard pouvant être détecté.

14. Dispositif selon la revendication 13, **caractérisé en ce que** l'activation ne se produit que dans le cas d'une vitesse de véhicule nulle.

15. Dispositif selon au moins l'une des revendications 1, 13, 14, **caractérisé en ce que**, lors de l'activation du dispositif de réglage, des changements de niveau, qui sont attribués à un changement du chargement, sont réglés.

16. Dispositif selon la revendication 1, **caractérisé par** les caractéristiques suivantes :
a) un état "manoeuvre" est prévu, dans lequel le dispositif de réglage est activé ;
b) pour l'état "manoeuvre", un niveau de manoeuvre de consigne correspondant à cet état est déterminé par le dispositif de réglage.

17. Dispositif selon la revendication 16, **caractérisé en ce que**, à partir de l'état "arrêt", l'état "manoeuvre" est reconnu, lorsque la vitesse de marche est supérieure à zéro mais inférieure à une vitesse minimale déterminant l'état de marche.

18. Dispositif selon la revendication 16 ou 17, **caractérisé en ce que**, pour l'état de marche, un niveau de marche de consigne est prédéterminé comme niveau de consigne par le dispositif de réglage, et le niveau de manoeuvre de consigne est déterminé par le niveau de marche de consigne réduit au niveau de marche-centre de l'essieu-distance actuel, où le niveau de marche-centre de l'essieu-distance actuel est généré par un changement de niveau manuel.

19. Dispositif selon l'une des revendications 16 à 18, **caractérisé en ce que** le niveau de manoeuvre de consigne peut être changé manuellement.

20. Dispositif selon la revendication 19, **caractérisé en ce que** le changement du niveau de manoeuvre de consigne ne se produit qu'à l'intérieur de la plage de niveau admissible pour le véhicule.

21. Dispositif selon la revendication 20, **caractérisé en ce que**, en vue d'un changement manuel du niveau d'arrêt de consigne, l'actionnement d'un seul commutateur est nécessaire, qui dispose au moins des positions de commutation "remonter" et "abaisser".

22. Dispositif selon au moins une des revendications 16 à 21, **caractérisé en ce que**, pour l'état de marche, le niveau de marche de consigne est prédéterminé en tant que niveau de consigne par le dispositif de réglage, et l'électronique de réglage détecte le niveau d'arrêt de consigne, le niveau de manoeuvre de consigne ou le niveau de marche de consigne correspondant à l'état de fonctionnement existant du véhicule.

23. Dispositif selon au moins une des revendications précédentes, **caractérisé en ce que** le niveau d'arrêt de consigne représente le niveau d'arrêt, comme il a été réglé automatiquement dans le véhicule pendant le temps de retard.

24. Dispositif selon la revendication 23, **caractérisé en ce que** le niveau d'arrêt de consigne est détecté comme moment de l'écoulement du temps de retard, pendant lequel les distances effectives existant à ce moment sont lues.
